# EUROPÄISCHE PATENTSCHRIFT

(11) **EP 4 090 613 B1**
(45) Veröffentlichungstag und Bekanntmachung des Hinweises auf die Patenterteilung: **09.10.2024**
(21) Anmeldenummer: 21762604.3
(22) Anmeldetag: 16.07.2021
(51) Int. Cl.: B65G 17/34, B65G 47/96, B65G 43/02

(54) **SORTIERFÖRDERER SOWIE FÖRDERWAGEN FÜR EINEN SORTIERFÖRDERER**
SORTING CONVEYOR AND CONVEYING CART FOR A SORTING CONVEYOR
CONVOYEUR DE TRI ET CHARIOT DE TRANSPORT POUR UN CONVOYEUR DE TRI

(30) Priorität: 28.07.2020 DE 102020209505
(43) Veröffentlichungstag der Anmeldung: 23.11.2022
(73) Patentinhaber: Gebhardt Fördertechnik GmbH, 74889 Sinsheim (DE); Körber Supply Chain GmbH, 61231 Bad Nauheim (DE)
(72) Erfinder: DEMIR, Halit, 74889 Sinsheim (DE); GEBHARDT, Marco, 74889 Sinsheim (DE)
(74) Vertreter: Ullrich & Naumann PartG mbB
(86) Internationale Anmeldenummer: PCT/DE2021/200095
(87) Internationale Veröffentlichungsnummer: WO 2022/022786

(56) Entgegenhaltungen:
- CN-U- 207 434 431
- DE-A1- 102012 010 056
- US-A1- 2017 283 183

## Beschreibung

Die Erfindung betrifft einen Sortierförderer, insbesondere Quergurtsorter, umfassend einen Grundaufbau, ein an dem Grundaufbau angeordnetes Führungselement, mindestens einen Förderwagen, der ausgelegt ist, entlang des Führungselements des Sortierförderers in einer Förderrichtung befördert zu werden, sowie eine Messeinrichtung zur Überwachung mindestens eines Betriebszustandes des Förderwagens und/oder des Führungselements.

Sortierförderer bzw. Verteilförderer sind Stückgut-Sortiersysteme zum "Identifizieren von in ungeordneter Reihenfolge ankommendem Stückgut aufgrund vorgegebener Unterscheidungsmerkmale und zum Verteilen auf Ziele, die nach den jeweiligen Erfordernissen festgelegt werden" (s. VDI-Richtlinie 3619). Eine Klassifikation findet dabei insbesondere nach der Leistungsfähigkeit statt. Höchste Durchsetze mit mehr als 10.000 Sortiergütern pro Stunde werden dabei bspw. von sogenannten Quergurtsortern erreicht.

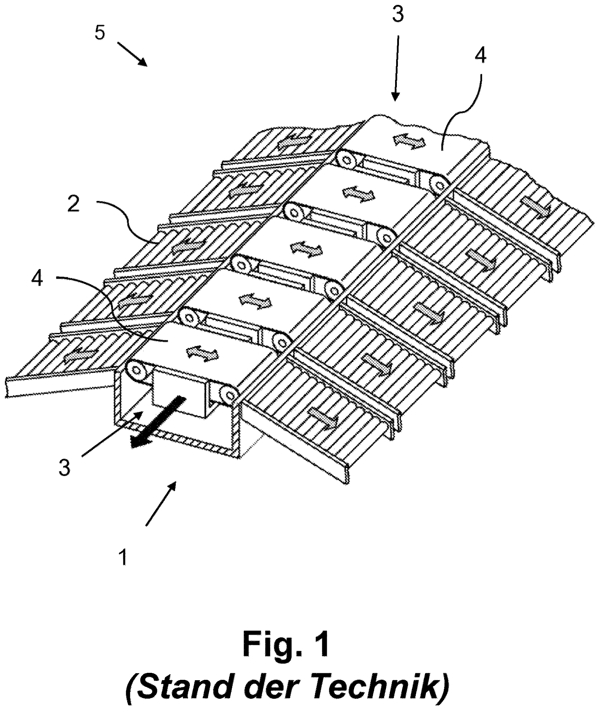

Der übliche Grundaufbau der genannten Sorter umfasst entsprechend der Darstellung in Fig. 1 eine Sortierstrecke 1, wobei längs dieser Sortierstrecke 1 aufeinanderfolgend Abwurfstationen 2 (Endstellen) und Einschleuse-Stationen (nicht gezeigt) angeordnet sind. Auf der Sortierstrecke 1 werden aufeinanderfolgend Förderwagen 3, oftmals auch als Carrier bezeichnet, geführt und angetrieben. Im Falle von Quergurtsortern weisen die Förderwagen 3 quer zu der Förderrichtung antreibbare Gurtförderer 4 zum Ein- und Ausschleusen des Sortierguts auf, wie beispielhaft in Fig. 1 gezeigt ist.

Sortierförderer der hier in Rede stehenden Art sind aus einer Vielzahl von Carriern aufgebaut. Üblicherweise verfügen die einzelnen Carrier eines Sortierförderers über einen linkshändigen und einen rechtshändigen Rollenverbund mit jeweils einer Mehrzahl von Rollen, welche im Betrieb zwei entlang der Sortierstrecke mit definiertem Abstand zueinander verlaufende Führungselemente des Sortierförderers kontaktieren. Die Führungselemente sind üblicherweise als Führungsrohre mit im Wesentlichen kreisförmigem Querschnitt ausgebildet. Die Rollen fungieren dabei entweder als Laufrollen oder als Führungs-/Stützrollen für den Förderwagen.

Während die Laufrollen auf den Führungsrohren aufliegen und auf diesen abrollen, halten die Führungs-/Stützrollen den Wagen in Position. Eine Koppelstange, welche sich bspw. am Ende eines jeden Carrier befindet, bildet das Verbindungselement zwischen jeweils zwei benachbarten Carriern. Dadurch kann der gesamte Sorter zu einer Endloskette aus einer Vielzahl von Förderwagen werden.

Als problematisch erweist sich im Stand der Technik oftmals das Fahrverhalten der Carrier, wobei dieses bspw. durch Verschleiß an den Führungsrollen der Carrier bzw. Verformungen an den Carriern oder an den Führungselementen negativ beeinflusst wird. In herkömmlichen Verteilsystemen, insbesondere Quergurtsortern, werden derartige Effekte, d.h. bspw. ein erhöhter Verschleiß an den Führungsrollen der Carrier bzw. eine Verformung an den Carriern, häufig zu spät bemerkt, da die betroffenen Stellen während des Betriebs üblicherweise nicht zugänglich sind. Diesbezügliche Untersuchungen finden demzufolge ausschließlich im Rahmen von festen Wartungsintervallen statt. Entsprechend häufig sind diese Wartungsintervalle durchzuführen. Außerdem gibt es aktuell keine Möglichkeiten, größere Verformungen am Carrier zeitnah zu erkennen, was unter Umständen zu größeren Folgeschäden führen kann.

Aus der DE 10 2012 010 056 A1, in der die Merkmale des Oberbegriffs von Anspruch 1 enthalten sind, ist eine Betätigungseinheit für eine Sortiervorrichtung von Stückgütern bekannt, wobei die Betätigungseinheit eine Klappe mit einer Antriebskomponente zur Übertragung einer Antriebskraft auf ein Antriebsrad eines Förderwagens der Sortiervorrichtung umfasst. Über die dadurch erzeugte Drehbewegung des Antriebsrads wird eine Bewegung des Gurtbands des Förderwagens bewirkt.

Aus der US 2017/0283183 A1 ist ein Sortierförderer mit einer Förderstrecke und einer Reihe von Förderwagen bekannt, die ausgelegt sind, entlang eines Führungselements des Sortierförderers befördert zu werden. Der Sortierförderer umfasst einen Verschleißwächter zur Detektion eines Verschleißes der Räder des Förderwagens und/oder des Führungselements.

Der vorliegenden Erfindung liegt die Aufgabe zugrunde, einen Sortierförderer der eingangs genannten Art derart auszugestalten und weiterzubilden, dass der Wartungsaufwand und die Stillstandszeiten der Sortieranlage verringert sind. Erfindungsgemäß wird die voranstehende Aufgabe durch die Merkmale des Anspruchs 1 gelöst.

In erfindungsgemäßer Weise ist erkannt worden, dass die zugrundeliegende Aufgabe dadurch gelöst werden kann, dass eine Messeinrichtung in den Sortierförderer eingebaut wird, welche eingerichtet ist, mindestens einen Betriebszustand des Förderwagens und/oder des Führungselements zu überwachen. Durch eine Integration der Messeinrichtung in den Sortierförderer kann erreicht werden, dass bestimmte Betriebszustände außerhalb von definierten Wartungsintervallen überprüft werden können, insbesondere sogar während eines regulären Betriebs der gesamten Anlage. Durch die definierte Einbausituation ist es möglich, aus Positionsabweichungen des Arbeitszylinders der Messeinrichtung Rückschlüsse auf bestimmte Betriebszustände des Förderwagens und/oder der Führungselemente des Förderwagens zu ziehen. Mit dem erfindungsgemäßen Sortierförderer lassen sich somit die eingangs genannten Nachteile vermeiden bzw. zumindest signifikant reduzieren. Insbesondere lassen sich mittels einer in den Sortierförderer integrierten Mess- bzw. Prüfeinrichtung, bspw. im Rahmen eines Predictive Maintenance, der Wartungsaufwand, die Kosten und die Stillstandszeiten der Sortieranlage deutlich verringern.

In konstruktiver Hinsicht umfasst die Messeinrichtung einen Arbeitszylinder, der eingerichtet ist, zwischen dem Grundaufbau einerseits und einem an dem Förderwagen in einer definierten Einbausituation montierten Referenz-Bauteil andererseits zu wirken. Dabei ist vorgesehen, dass der Zylinderkolben mit einer konstanten Arbeitskraft beaufschlagbar ist. Die Auslenkung des Zylinders, d.h. die Positionen des Zylinderkolbens, kann gemessen werden. Auf diese Weise lassen sich Abstandsänderungen zwischen dem Referenz-Bauteil und dem Grundaufbau mit hoher Genauigkeit detektieren. Im konkreten ist dem Arbeitszylinder hierzu ein Positionstransmitter zugeordnet. Dieser kann einerseits die Position des Zylinderkolbens quer zur Förderrichtung messen und zudem die gemessenen Positionsdaten an eine Steuerkomponente der Messeinrichtung übermitteln.

Gemäß einer vorteilhaften Ausgestaltung kann vorgesehen sein, dass die Messeinrichtung mittelbar oder unmittelbar dem Grundaufbau zugeordnet ist. Auf diese Weise ergibt sich zum einen die Möglichkeit der einfachen Vormontage der Messeinrichtung in einzelne der Module, aus denen sich der Sortierförderer zusammensetzt. Zum anderen stellt der Grundaufbau des Sortierförderers aufgrund der festen bodenseitigen Montage und der starren Struktur ein geeignetes Referenzobjekt dar, gegenüber dem Messungen mit hoher Genauigkeit durchführbar sind.

Der Arbeitszylinder kann in Abhängigkeit von der konkreten Einsatzsituation grundsätzlich mit unterschiedlichen Arbeitsmedien betrieben werden. Insbesondere kann der Arbeitszylinder bspw. als Pneumatikzylinder, als Hydraulikzylinder oder als Elektrozylinder ausgeführt sein.

Zur Herstellung eines sicheren, verschleißarmen Kontakts zwischen der Messeinrichtung und dem Referenz-Bauteil kann vorgesehen sein, dass das Referenz-Bauteil als ein an einem Wagenrahmen des Förderwagens drehbar angeordneter Rundkörper ausgebildet ist. Der Begriff "Rundkörper" ist dabei in einem weiten Sinne zu verstehen und umfasst insbesondere Räder, Rollen, Walzen oder dergleichen. Durch eine derartige Ausgestaltung des Referenz-Bauteils kann dieses bei einer Vorbeifahrt des Förderwagens an der Messeinrichtung an einer geeignet ausgebildeten und mittelbar oder unmittelbar mit dem Arbeitszylinder der Messeinrichtung gekoppelten Fläche abrollen, ohne die Laufruhe des Förderwagens störend zu beeinflussen.

Gemäß einer konkreten Ausführungsform könnte die genannte Fläche als Reibleiste ausgebildet sein, die mit der Kolbenstange des Arbeitszylinders mittelbar oder unmittelbar gekoppelt ist. Die Positionierung der Reibleiste in Bezug auf den Grundaufbau des Sortierförderers ist dabei derart gewählt, dass die Reibleiste bei einer Vorbeifahrt des Förderwagens gegen das Referenz-Bauteil gedrückt wird.

Im Hinblick auf einen möglichst sicheren und störungsfreien Betrieb des Sortierförderers erweist es sich als vorteilhaft, wenn die Messeinrichtung nur während der tatsächlichen Durchführung von Messungen mit dem Sortierförderer bzw. den Förderwagen wechselwirkt. Hierzu kann vorgesehen sein, dass die Reibleiste (bzw. generell die Fläche, die mit dem Referenz-Bauteil am Förderwagen in Kontakt tritt) an einem mit der Kolbenstange des Arbeitszylinders über einen Schwenk- oder Klappmechanismus gekoppelten Trägerarm angeordnet ist. Der Schwenk- oder Klappmechanismus kann dabei derart ausgestaltet sein, dass ein Schwenken bzw. Klappen des Trägerarms von einer Messposition, in der die Reibleiste das Referenz-Bauteil eines vorbeifahrenden Förderwagens kontaktiert, in eine Ruheposition, in der die Reibleiste das Referenz-Bauteil eines vorbeifahrenden Förderwagens nicht kontaktiert, und umgekehrt ermöglicht ist. Für die Fixierung in der Messposition kann eine Arretierung vorgesehen sein, um reproduzierbare Messergebnisse zu gewährleisten.

Gemäß einer besonders bevorzugten Ausführungsform wird der Umstand ausgenutzt, dass Sortierförderer der hier in Rede stehenden Art üblicherweise über eine Ausschleusemechanik verfügen. Diese Ausschleusemechanik umfasst eine dem Grundaufbau der jeweiligen Module des Sortierförderers zugeordnete Reibleiste sowie dazu korrespondierend auf Seiten des Förderwagens ein unterhalb des Wagenrahmens des Förderwagens angeordnetes Antriebs- bzw. Reibrad. Soll ein von einem Förderwagen transportiertes Stückgut an einer bestimmten Position ausgeschleust werden, so wird die Reibleiste des jeweiligen Moduls in eine Position verbracht, in der sie das Antriebs- bzw. Reibrad des Förderwagens kontaktiert. Das Antriebs- bzw. Reibrad bildet dabei den Antrieb für die Ausschleusecharakteristik des Förderwagens, d.h. bspw. den Quergurt im Falle eines Quergurtsorters oder die Kippschale im Falle eines Kippschalensorters.

Gemäß einer Ausführungsform der Erfindung wird das ohnehin bereits an dem Förderwagen vorhandene Antriebs- bzw. Reibrad zur Betätigung der Ausschleusecharakteristik des Förderwagens in einer zusätzlichen Funktion als das Referenz-Bauteil der Messeinrichtung verwendet. Dies hat den Vorteil, dass zur Umsetzung der vorliegenden Erfindung keine Modifikationen an den Förderwagen des Sortierförderer vorgenommen werden müssen. Allerdings ist bei dieser Ausgestaltung zu beachten, dass der Förderwagen während des Messvorgangs nicht mit Fördergut beladen ist, da während der Messung der Quergurt bzw. die Kippschale des Förderwagens angetrieben bzw. aktiviert wird, wodurch ein ungewolltes Ausschleusen eines etwaigen Förderguts bewirkt würde.

Im Hinblick auf eine effektive Handhabung der Messdaten kann vorgesehen sein, dass die Messeinrichtung eine dezentrale Steuerungskomponente aufweist, die konfiguriert ist, die Positionsinformationen des Zylinderkolbens zu empfangen. Die dezentrale Steuerungskomponente kann zudem konfiguriert sein, die empfangenen Positionsinformationen lokal unter Anwendung vorgebbarer Algorithmen auszuwerten. Alternativ kann vorgesehen sein, dass die empfangenen Messdaten von der dezentralen Steuerungskomponente lediglich vorverarbeitet und zur eigentlichen Datenauswertung an eine übergeordnete Steuerung übermittelt werden. Insbesondere kann über eine übergeordnete Steuerung eine Zuordnung der Messwerte zu den einzelnen Förderwagen des Sortierförderer erfolgen, da der Steuerung bekannt ist, welcher Förderwagen zu welchem Zeitpunkt an einer bestimmten Messeinrichtung des Sortierförderers entlangfährt. So können über die Steuerung insbesondere die exakten Positionen der Referenz-Bauteile, zugeordnet zu den einzelnen Carriern, über die gesamte Laufzeit der Anlage gemessen und ausgewertet werden.

Im Rahmen der Datenauswertung kann vorgesehen sein, dass aus den Positionsdaten bspw. ein Verschleißzustand von Führungsrollen des jeweiligen Förderwagens und/oder ein Verschleißzustand des als Referenz-Bauteil fungierenden Antriebs-/Reibrades des Förderwagens abgeleitet werden. Hierbei liegt die Überlegung zugrunde, dass sich bei einem Verschleiß des Belags bspw. der seitlichen Führungsrolle des Förderwagens deren Durchmesser reduziert. Dementsprechend tritt der Zylinderkolben des Arbeitszylinders, bei konstanter Kraftbeaufschlagung, weiter aus dem Zylinder aus, was als Positionsänderung des Zylinderkolbens detektiert werden kann.

Zusätzlich oder alternativ kann im Rahmen der Datenauswertung vorgesehen sein, dass aus den Positionsinformationen unter Anwendung vorgebbarer Algorithmen Informationen über Verformungen an dem gesamten Förderwagen oder an einzelnen Komponenten des Förderwagens abgeleitet werden. Als Indiz für derartige Verformungen könnte eine Detektion von größeren Positionsabweichungen des Zylinderkolbens des Arbeitszylinders innerhalb einer kurzen Zeitspanne definiert werden. Sowohl die Größe der Positionsabweichungen als auch die Länge der Zeitspanne können dabei durch entsprechende Schwellenwerte definiert werden.

Zur weiteren Verbesserung des Aussagegehalts der gemessenen Positionsdaten kann vorgesehen sein, dass entlang der Sortierstrecke des Sortierförderers eine Mehrzahl von Messeinrichtungen angeordnet ist. Im Rahmen einer bevorzugten Ausgestaltung greift dabei mindestens eine der Messeinrichtungen von der in Förderrichtung gesehen rechten Seite auf das Referenz-Bauteil des Förderwagens zu, während mindestens eine andere der Messeinrichtungen von der in Förderrichtung gesehen linken Seite auf das Referenz-Bauteil des Förderwagens zugreift. Auf diese Weise lässt sich ein auf beiden Seiten des Sortierförderers (in Förderrichtung gesehen) unterschiedlicher Verschleiß der Führungsrollen zuverlässig detektieren.

Es gibt nun verschiedene Möglichkeiten, die Lehre der vorliegenden Erfindung in vorteilhafter Weise auszugestalten und weiterzubilden. Dazu ist einerseits auf die abhängigen Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung den allgemeinen Aufbau eines Quergurtsorters gemäß dem Stand der Technik,

- Fig. 2: in einer geschnittenen Ansicht einen Sortierförderer mit einem Förderwagen sowie mit einer Messeinrichtung in einer aktiven Messposition, und
- Fig. 3: in einer geschnittenen Ansicht einen Sortierförderer mit einem Förderwagen sowie mit einer Messeinrichtung in einer passiven Ruheposition.

In den Figuren bezeichnen gleiche Bezugszeichen, soweit nicht anders angegeben, gleiche Komponenten bzw. Bauteile.

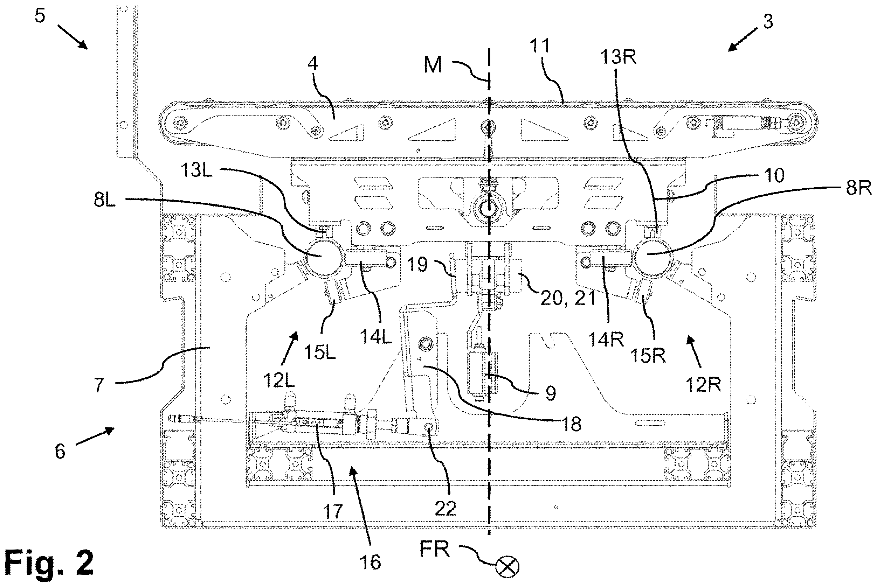

Fig. 2 zeigt - schematisch - in einer geschnittenen Darstellung die grundsätzliche Einbausituation eines Förderwagens 3 innerhalb eines Sortierförderers 5 (nachfolgend auch als Sortieranlage oder Verteilförderer bezeichnet). Der Sortierförderer 5 umfasst einen auf einer bodenseitigen Basis angeordneten Grundaufbau 6, der in der gezeigten Ausführungsform als Gestell 7 mit einem im Wesentlichen U-förmigen Querschnitt ausgebildet ist. Im Inneren des Querschnitts sind zwei symmetrisch zu einer Mittelachse M des Sortierförderers 5 entlang der Sortierstrecke verlaufende Führungselemente 8L, 8R für die Förderwagen 3 vorgesehen. Zur Beförderung der Förderwagen 3 läuft vorzugsweise auf der Mittelachse M des Sortierförderers 5 eine angetriebene Gummiblockkette 9, an welche die Förderwagen 3 angebunden sind und die als Antriebskette für die Förderwagen 3 dient. In Fig. 2 ist die Darstellung so gewählt, dass die Förderrichtung FR in die Zeichenebene hineinzeigt.

Der Förderwagen 3 umfasst einen Wagenrahmen 10 sowie ein auf dem Wagenrahmen 10 angeordnetes lasttragendes Element für Sortiergüter. Im Falle eines Quergurtsorters ist das lasttragende Element, wie in Fig. 2 gezeigt, als Gurtförderer 4 mit einem elektrisch oder mechanisch quer zur Förderrichtung FR des Förderwagens 3 betätigbaren Gurt 11 zum Ein- und Ausschleusen der Sortiergüter ausgebildet.

An einer Unterseite des Wagenrahmens 10 sind zwei Rollenverbunde 12 angeordnet, wobei einer der Rollenverbunde 12 als linkshändiger Rollenverbund 12L zum Zusammenwirken mit dem in Förderrichtung FR gesehen linken Führungselement 8L und der andere Rollenverbund 12 als rechtshändiger Rollenverbund 12R zum Zusammenwirken mit den in Förderrichtung FR gesehen rechten Führungselement 8R ausgebildet ist. Linkshändiger und rechtshändiger Rollenverbund 12L, 12R sind spiegelsymmetrisch zu einer Spiegelebene aufgebaut, wobei die Spiegelebene durch die Förderrichtung FR und die Mittelachse M des Sortierförderers 5 definiert wird.

Bei dem dargestellten Ausführungsbeispiel umfasst jeder der beiden Rollenverbunde 12L, 12R jeweils eine Laufrolle 13L, 13R, die das jeweils zugeordnete Führungselement 8L, 8R von oben kontaktiert und auf diesem abrollt und so eine Rollbewegung des Förderwagens 3 auf dem zugeordneten Führungselement 8L, 8R ermöglicht. Des Weiteren umfasst jeder der beiden Rollenverbunde 12L, 12R eine seitliche Führungsrolle 14L, 14R, die einen seitlichen Flächenabschnitt des jeweils zugeordneten Führungselements 8L, 8R kontaktiert und hauptsächlich zur seitlichen Stabilisierung der Rollbewegung des Förderwagens 3 dient. Schließlich umfasst jeder der beiden Rollenverbunde 12L, 12R eine untere Führungsrolle 15L, 15R, die zusätzlich zur Bereitstellung einer seitlichen Stütz- bzw. Stabilisierungswirkung im Sinne einer Abhebesicherung wirkt, die ein Abheben der Laufrollen 13L, 13R von den Führungselementen 8L, 8R, bspw. bewirkt durch Stöße oder Unebenheiten, verhindert. Es versteht sich, dass die vorliegende Erfindung nicht auf die konkrete Rollenanordnung wie in Fig. 2 gezeigt beschränkt ist.

Insbesondere die seitlichen Führungsrollen 14L, 14R unterliegen einem erheblichen Verschleiß, der häufig unbemerkt bleibt, da diese Rollen (und generell der Bereich unterhalb des Wagenrahmens 10) während des Betriebs des Sortierförderers 5 nicht zugänglich sind. Eine entsprechende Untersuchung erfolgt im Allgemeinen nur in festgelegten Wartungsintervallen. Abgesehen von einem erhöhten Verschleiß können an einem Förderwagen aufgetretene Verformungen, sofern diese unerkannt bleiben, unter Umständen zu größeren Folgeschäden führen.

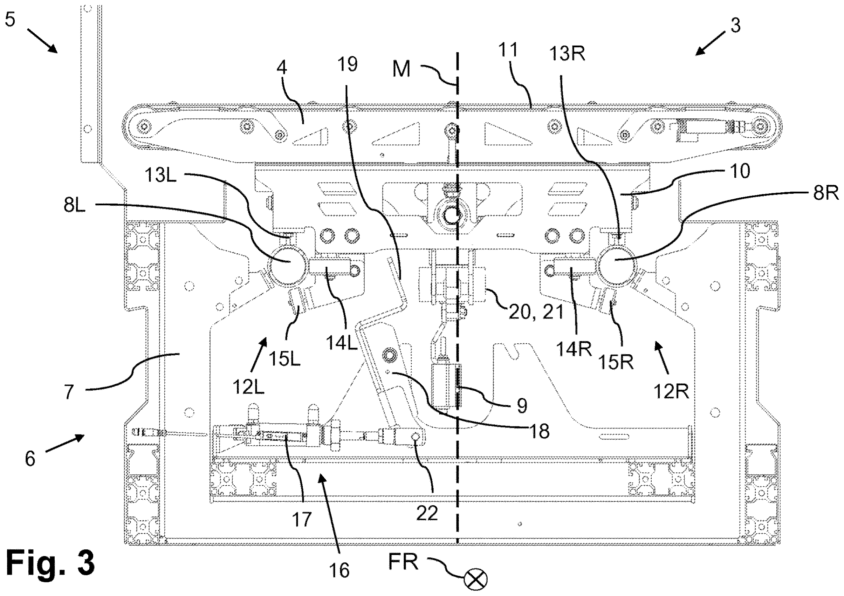

Die vorliegende Erfindung schafft in dieser Hinsicht Abhilfe, indem eine automatische Messeinrichtung in den Sortierförderer 5 integriert wird. Fig. 2 und 3 zeigen ein Modul eines Sortierförderer mit einer erfindungsgemäß integrierten Messeinrichtung 16. Während Fig. 2 die Messeinrichtung 16 im aktiven Betrieb zeigt, ist die Messeinrichtung 16 in Fig. 3 in einer passiven Ruheposition dargestellt, wie weiter unten im Detail erläutert wird.

Gemäß dem dargestellten Ausführungsbeispiel umfasst die Messeinrichtung 16 einen pneumatischen Arbeitszylinder 17, der an seiner einen Seite mittelbar oder unmittelbar an dem Grundaufbau 6 bzw. dem Gestell 7 des Moduls festgelegt ist und an seiner anderen Seite mittelbar oder unmittelbar mit einem Trägerarm 18 gekoppelt ist. An dem Trägerarm 18 ist endseitig eine Reibleiste 19 angeordnet, die eingerichtet ist, mit einem an dem Wagenrahmen 10 des Förderwagens 3 in einer definierten Einbausituation angeordneten Referenz-Bauteil 20 zusammenzuwirken.

Die Funktionsweise der Messeinrichtung 16 ist dergestalt, dass über den pneumatischen Zylinder 17 der Trägerarm 18 mit der Reibleiste 19 mit einer definierten konstanten Kraft gegen das Referenz-Bauteil 20 des vorbeifahrenden Carriers 3 gedrückt wird. Das Referenz-Bauteil 20 ist vorzugsweise als Rundkörper (insbesondere Rad oder Rolle) ausgebildet, sodass das Referenz-Bauteil 20 an der Reibleiste 19 abrollen kann, ohne die Laufruhe des Carriers 3 während der Messung negativ zu beeinflussen. Mithilfe eines Positionstransmitters am Pneumatikzylinder 17 wird die Position des abrollenden Referenz-Bauteil 20 quer zur Förderrichtung FR gemessen, wie in Fig. 2 durch den gestrichelten Pfeil angedeutet, und an eine dezentrale oder zentrale übergeordnete Steuerung (nicht gezeigt) kommuniziert.

Bei dem in den Fig. 2 und 3 dargestellten Ausführungsbeispiel handelt es sich bei dem Referenz-Bauteil 20 nicht um ein spezielles zusätzliches Bauteil. Vielmehr ist die Messeinrichtung 16 derart ausgeführt, dass das an dem Wagenrahmen 10 des Förderwagens 3 ohnehin vorhandene Antriebs-/Reibrad 21, welches primär zum Antreiben des Gurtes 11 des Gurtförderers 4 dient, gleichzeitig als Referenz-Bauteil 20 fungiert. Hierbei ist zu beachten, dass während des Messvorgangs der Carrier 3 nicht mit Fördergut beladen ist, da der Gurt auf dem Carrier während des Messvorgangs angetrieben wird und dementsprechend das Fördergut ungewollt ausgeschleust wird.

Über eine dezentrale Steuerkomponente, die beispielsweise als SPS Steuerung ausgeführt sein kann, können die gemessenen Positionsdaten individuellen Förderwagen 3 zugeordnet werden. Hierzu wird auf die an der Steuerkomponente vorliegende Information, welcher Förderwagen 3 zu welchem Zeitpunkt die Messeinrichtung 16 passiert, zurückgegriffen. Dementsprechend können über die Steuerung die Positionen der Referenz-Bauteile 20, zugeordnet zu den einzelnen Carriern 3, über die gesamte Laufzeit der Anlage gemessen und ausgewertet werden.

Unter Zugrundelegung geeigneter Auswertungsalgorithmen können zum Beispiel durch eine kontinuierlich stattfindende Bewertung der Positionen der Referenz-Bauteile 20 der einzelnen Carrier 3 indirekt folgende Zustände ermittelt werden:
1. Verschleiß des Belags an den seitlichen Führungsrollen 14L, 14R über den reduzierten Durchmesser;
2. Verschleiß des Belags am unteren Antriebs-/Reibrad 21 für den Gurt 11 des Förderwagens 3 über den reduzierten Durchmesser;
3. Verformungen am gesamten Carrier 3 oder an dessen Komponenten anhand einer Detektion größere Positionsabweichungen in kurzer Zeit.

Mittels entsprechender Auswertung der Messdaten können zudem Rückschlüsse auf allgemeine Unregelmäßigkeiten gezogen werden, die auf unbekannte Probleme hindeuten. Ebenfalls ist eine indirekte Ermittlung weiterer Zustände möglich, die während des Sammelns und Auswertens der gemessenen Positionsdaten auffallen.

Wie bereits oben angemerkt, zeigt Fig. 3 die Messeinrichtung 16 in einer Ruheposition, in der die Reibleiste 19 das Referenz-Bauteil 20 eines vorbeifahrenden Förderwagens 3 nicht kontaktiert. Hierzu ist zwischen dem Arbeitszylinder 17 und dem Trägerarm 18 ein Schwenk- oder Klappmechanismus 22 angeordnet ist, der es ermöglicht, den Trägerarm 18 mitsamt der Reibleiste 19 von dem Referenz-Bauteil 20 weg zu schwenken bzw. zu klappen. Auf diese Weise kann erreicht werden, dass die Messeinrichtung 16 nur während der tatsächlichen Durchführung von Messungen mit dem Sortierförderer 5 bzw. den Förderwagen 3 wechselwirkt, sodass insgesamt ein möglichst sicherer und störungsfreier Betrieb gewährleistet ist.

## Patentansprüche

1. Sortierförderer, insbesondere Quergurtsorter, umfassend:
einen Grundaufbau (6),
ein an dem Grundaufbau (6) angeordnetes Führungselement (8L, 8R),
mindestens einen Förderwagen (3), der ausgelegt ist, entlang des Führungselements (8L, 8R) des Sortierförderers (5) in einer Förderrichtung (FR) befördert zu werden, sowie
eine Messeinrichtung (16) zur Überwachung mindestens eines Betriebszustandes des Förderwagens (3) und/oder des Führungselements (8L, 8R), **dadurch gekennzeichnet, dass** die Messeinrichtung (16) einen Arbeitszylinder (17) umfasst, dessen Zylinderkolben mit einer konstanten Arbeitskraft beaufschlagbar ist und der zwischen dem Grundaufbau (6) und einem an dem Förderwagen (3) in einer definierten Einbausituation montierten Referenz-Bauteil (20) wirkt, wobei dem Arbeitszylinder (17) ein Positionstransmitter zugeordnet ist, der konfiguriert ist, die Position des Zylinderkolbens zu bestimmen.

2. Sortierförderer nach Anspruch 1, wobei die Messeinrichtung (16) mittelbar oder unmittelbar dem Grundaufbau (6) zugeordnet ist.

3. Sortierförderer nach Anspruch 1 oder 2, wobei der Arbeitszylinder (17) als Pneumatikzylinder, als Hydraulikzylinder oder als Elektrozylinder ausgeführt ist.

4. Sortierförderer nach einem der Ansprüche 1 bis 3, wobei das Referenz-Bauteil (20) als ein an einem Wagenrahmen (10) des Förderwagens (3) drehbar angeordneter Rundkörper ausgebildet ist.

5. Sortierförderer nach einem der Ansprüche 1 bis 4, wobei die Kolbenstange des Arbeitszylinders (17) mittelbar oder unmittelbar mit einer Reibleiste (19) gekoppelt ist, derart, dass die Reibleiste (19) bei einer Vorbeifahrt des Förderwagens (3) an der Messeinrichtung (16) gegen das Referenz-Bauteil (20) gedrückt wird.

6. Sortierförderer nach Anspruch 5, wobei die Reibleiste (19) an einem mit dem Arbeitszylinder (17) über einen Schwenk- oder Klappmechanismus (22) gekoppelten Trägerarm (18) angeordnet ist, wobei der Schwenk- oder Klappmechanismus (22) eingerichtet ist, den Trägerarm (18) von einer Messposition, in der die Reibleiste (19) das Referenz-Bauteil (20) eines die Messeinrichtung (16) passierenden Förderwagens (3) kontaktiert, in eine Ruheposition, in der die Reibleiste (19) das Referenz-Bauteil (20) eines die Messeinrichtung (16) passierenden Förderwagens (3) nicht kontaktiert, und umgekehrt zu schwenken bzw. zu klappen.

7. Sortierförderer nach einem der Ansprüche 1 bis 6, wobei der Förderwagen (3) ein an einem Wagenrahmen (10) des Förderwagens (3) angeordnetes Antriebsrad (21) aufweist, welches eingerichtet ist, durch Zusammenwirken mit einer Reibleiste einen Quergurt (11) oder eine Kippschale des Förderwagens (3) anzutreiben bzw. zu aktivieren, wobei das Antriebsrad (21) als das Referenz-Bauteil (20) fungiert.

8. Sortierförderer nach einem der Ansprüche 1 bis 7, wobei die Messeinrichtung (16) eine Steuerungskomponente aufweist, die konfiguriert ist, Positionsinformationen des Zylinderkolbens zu empfangen und aus den empfangenen Positionsinformationen unter Anwendung vorgebbarer Algorithmen einen Verschleißzustand von Führungsrollen (14L, 14R) des Förderwagens (3) und/oder einen Verschleißzustand des Antriebsrades (21) des Förderwagens (3) abzuleiten.

9. Sortierförderer nach einem der Ansprüche 1 bis 8, wobei die Messeinrichtung (16) eine Steuerungskomponente aufweist, die konfiguriert ist, aus den empfangenen Positionsinformationen unter Anwendung vorgebbarer Algorithmen Informationen über Verformungen an dem gesamten Förderwagen (3) oder an einzelnen Komponenten des Förderwagens (3) abzuleiten.

10. Sortierförderer nach einem der Ansprüche 1 bis 9, wobei entlang der Sortierstrecke des Sortierförderers (5) eine Mehrzahl von Messeinrichtungen (16) angeordnet ist, wobei vorzugsweise mindestens eine der Mehrzahl von Messeinrichtungen (16) aus einer Richtung in Förderrichtung (FR) gesehen rechts von einer Mittelachse (M) des Sortierförderers (5) auf das Referenz-Bauteil (20) einwirkt und mindestens eine andere der Mehrzahl von Messeinrichtungen (16) aus einer Richtung in Förderrichtung (FR) gesehen links von der Mittelachse (M) des Sortierförderers (5) auf das Referenz-Bauteil (20) einwirkt.

## Claims

1. Sorting conveyor, in particular cross belt sorter, comprising:
a basic structure (6),
a guiding element (8L, 8R) which is arranged on the basic structure (6), at least one conveying carriage (3) which is configured to be conveyed along the guiding element (8L, 8R) of the sorting conveyor (5) in a conveying direction (FR), and
a measuring device (16) for monitoring at least one operating state of the conveying carriage (3) and/or the guiding element (8L, 8R),
**characterised in that** the measuring device (16) comprises a working cylinder (17) whose cylinder piston can be acted on with a constant working force and which acts between the basic structure (6) and a reference component (20) which is mounted on the conveying carriage (3) in a defined installation situation, wherein there is associated with the working cylinder (17) a position transmitter which is configured to determine the position of the cylinder piston.

2. Sorting conveyor according to claim 1, wherein the measuring device (16) is associated indirectly or directly with the basic structure (6).

3. Sorting conveyor according to claim 1 or 2, wherein the working cylinder (17) is in the form of a pneumatic cylinder, a hydraulic cylinder or an electric cylinder.

4. Sorting conveyor according to any one of claims 1 to 3, wherein the reference component (20) is in the form of a round member which is rotatably arranged on a carriage frame (10) of the conveying carriage (3).

5. Sorting conveyor according to any one of claims 1 to 4, wherein the piston rod of the working cylinder (17) is coupled indirectly or directly to a friction strip (19) in such a manner that the friction strip (19) when the conveying carriage (3) moves past the measuring device (16) is pressed against the reference component (20).

6. Sorting conveyor according to claim 5, wherein the friction strip (19) is arranged on a carrier arm (18) which is coupled to the working cylinder (17) by means of a pivot or folding mechanism (22), wherein the pivot or folding mechanism (22) is configured to pivot or fold the carrier arm (18) from a measuring position, in which the friction strip (19) contacts the reference component (20) of a conveying carriage (3) which passes the measuring device (16), into a rest position, in which the friction strip (19) does not contact the reference component (20) of a conveying carriage (3) which passes the measuring device (16), and vice versa.

7. Sorting conveyor according to any one of claims 1 to 6, wherein the conveying carriage (3) has a drive wheel (21) which is arranged on a carriage frame (10) of the conveying carriage (3) and which is configured, by cooperating with a friction strip, to drive or activate a cross belt (11) or a tilting tray of the conveying carriage (3), wherein the drive wheel (21) acts as the reference component (20).

8. Sorting conveyor according to any one of claims 1 to 7, wherein the measuring device (16) has a control component which is configured to receive position information items of the cylinder piston and from the position information items received using predeterminable algorithms to derive a wear state of guiding rollers (14L, 14R) of the conveying carriage (3) and/or a wear state of the drive wheel (21) of the conveying carriage (3).

9. Sorting conveyor according to any one of claims 1 to 8, wherein the measuring device (16) has a control component which is configured from the position data items received using predeterminable algorithms to derive information items relating to deformations in the entire conveying carriage (3) or in individual components of the conveying carriage (3).

10. Sorting conveyor according to any one of claims 1 to 9, wherein a plurality of measuring devices (16) are arranged along the sorting path of the sorting conveyor (5), wherein preferably at least one of the plurality of measuring devices (16) when viewed from a direction in the conveying direction (FR) acts on the reference component (20) on the right of a centre axis (M) of the sorting conveyor (5) and at least one other of the plurality of measuring devices (16) when viewed from a direction in the conveying direction (FR) acts on the reference component (20) on the left of the centre axis (M) of the sorting conveyor (5).

## Revendications

1. Convoyeur de tri, plus particulièrement trieur à sangles transversales, comprenant :
une structure de base (6),
un élément de guidage (8L, 8R) disposé sur la structure de base (6),
au moins un chariot de convoyage (3), qui est conçu pour être convoyé le long de l'élément de guidage (8L, 8R) du convoyeur de tri (5) dans une direction de convoyage (FR) ainsi que
un dispositif de mesure (16) pour la surveillance d'au moins un état de fonctionnement du chariot de convoyage (3) et/ou de l'élément de guidage (8L, 8R), **caractérisé en ce que** le dispositif de mesure (16) comprend un vérin de travail (17) dont le piston peut être sollicité avec une force de travail constante et qui agit entre la structure de base (6) et un composant de référence (20) monté dans une situation de montage définie sur le chariot de convoyage (3), dans lequel, au vérin de travail (17), correspond un transmetteur de position qui est conçu pour déterminer la position du piston.

2. Convoyeur de tri selon la revendication 1, dans lequel le dispositif de mesure (16) correspond, indirectement ou directement, à la structure de base (6).

3. Convoyeur de tri selon la revendication 1 ou 2, dans lequel le vérin de travail (17) est conçu comme un vérin pneumatique, un vérin hydraulique ou un vérin électrique.

4. Convoyeur de tri selon l'une des revendications 1 à 3, dans lequel le composant de référence (20) est conçu comme un corps rond disposé de manière rotative sur un châssis de chariot (10) du chariot de convoyage (3).

5. Convoyeur de tri selon l'une des revendications 1 à 4, dans lequel la tige de piston du vérin de travail (17) est couplée, indirectement ou directement, avec une barre de friction (19), de sorte que la barre de friction (19), lors d'un passage du chariot de convoyage (3) au niveau du dispositif de mesure (16), est comprimée contre le composant de référence (20).

6. Convoyeur de tri selon la revendication 5, dans lequel la barre de friction (19) est disposée sur un bras de support (18) couplé, par l'intermédiaire d'un mécanisme de pivotement ou de pliage (22), avec le vérin de travail (17), dans lequel le mécanisme de pivotement ou de pliage (22) est conçu pour pivoter ou plier le bras de support (18) d'une position de mesure, dans laquelle la barre de friction (19) entre en contact avec le composant de référence (20) d'un chariot de convoyage (3) passant devant le dispositif de mesure (16), vers une position de repos, dans laquelle la barre de friction (19) n'entre pas en contact avec le composant de référence (20) d'un chariot de convoyage (3) passant devant le dispositif de mesure (16), et inversement.

7. Convoyeur de tri selon l'une des revendications 1 à 6, dans lequel le chariot de convoyage (3) comprend une roue d'entraînement (21) disposé sur un châssis de chariot (10) du chariot de convoyage (3), qui est conçue pour entraîner ou activer, par l'interaction avec une barre de friction, une sangle transversale (11) ou une coque basculante du chariot de convoyage (3), dans lequel la roue d'entraînement (21) sert de composant de référence (20).

8. Convoyeur de tri selon l'une des revendications 1 à 7, dans lequel le dispositif de mesure (16) comprend un composant de commande qui est conçu pour recevoir des informations de position du piston et pour déduire des informations de position reçues, en utilisant des algorithmes prédéterminés, un état d'usure des rouleaux de guidage (14L, 14R) du chariot de convoyage (3) et/ou un état d'usure de la roue d'entraînement (21) du chariot de convoyage (3).

9. Convoyeur de tri selon l'une des revendications 1 à 8, dans lequel le dispositif de mesure (16) comprend un composant de commande qui est conçu pour déduire des informations de position reçues, en utilisant des algorithmes prédéterminés, des informations concernant des déformations sur l'ensemble du chariot de convoyage (3) ou sur différents composants du chariot de convoyage (3).

10. Convoyeur de tri selon l'une des revendications 1 à 9, dans lequel, le long du trajet de tri du convoyeur de tri (5), sont disposés une pluralité de dispositifs de mesure (16), dans lequel, de préférence, au moins un de la pluralité de dispositifs de mesure (16) agit, vu dans la direction de convoyage (FR), à droite d'un axe central (M) du convoyeur de tri (5), sur le composant de référence (20) et au moins un autre de la pluralité de dispositifs de mesure (16) agit, vu dans la direction de convoyage (FR), à gauche de l'axe central (M) du convoyeur de tri (5), sur le composant de référence (20).
